# EUROPÄISCHE PATENTSCHRIFT

(11) **EP 2 142 396 B1**
(45) Veröffentlichungstag und Bekanntmachung des Hinweises auf die Patenterteilung: **17.07.2013**
(21) Anmeldenummer: 08750129.2
(22) Anmeldetag: 07.05.2008
(51) Int. Cl.: B60L 11/18, H01M 10/48

(54) **VORRICHTUNG ZUM ÜBERWACHEN EINES ENERGIESPEICHERS**
DEVICE FOR MONITORING AN ENERGY STORAGE
DISPOSITIF POUR SURVEILLER UN ACCUMULATEUR D'ÉNERGIE

(30) Priorität: 10.05.2007 DE 102007021921
(43) Veröffentlichungstag der Anmeldung: 13.01.2010
(73) Patentinhaber: Siemens Aktiengesellschaft, 80333 München (DE)
(72) Erfinder: GRAF, Hans-Michael, 93049 Regensburg (DE); TRÖSCH, Christian, 92237 Sulzbach-Rosenberg (DE)
(86) Internationale Anmeldenummer: PCT/EP2008/055607
(87) Internationale Veröffentlichungsnummer: WO 2008/138823

(56) Entgegenhaltungen:
- EP-A- 1 588 900
- US-A- 4 217 645
- US-A- 5 927 938
- US-A- 5 955 865
- US-A- 6 094 031
- US-A1- 2006 038 572
- US-B1- 6 184 656

## Beschreibung

Die vorliegende Erfindung betrifft eine Vorrichtung zum Überwachen eines Energiespeichers, insbesondere einer wieder aufladbaren Batterie für ein Fahrzeug. Das Fahrzeug kann dabei insbesondere als ein Kraftfahrzeug in Form eines Personenkraftwagens oder Lastkraftwagens ausgebildet sein. Des Weiteren betrifft die vorliegende Erfindung einen Energiespeicher mit einer Identifizierungsvorrichtung, die in der Lage ist, mit der Vorrichtung zum Überwachen über eine drahtlose Kommunikationsschnittstelle zu kommunizieren.

Heutzutage werden Batterien von Kraftfahrzeugen, die typischerweise als Batterien auf Bleibasis ausgebildet sind, zunehmend mittels Sensoren überwacht. Diese Sensoren messen aktuelle Batteriebetriebsdaten, wie Spannung, Strom bzw. die Temperatur der Batterie. Die permanente Messung eines Stroms einer Batterie eines Kraftfahrzeugs, der zugeführt oder entnommen wird, erlaubt, zusammen mit der permanenten Messung der Batteriespannung und der Batterietemperatur, die Berechnung bestimmter Kenngrößen der Batterie bzw. die Berechnung von Batterieeigenschaften, wie dem Ladezustand, die Leistungsfähigkeit oder den Alterungsgrad der Batterie, die bei der frühzeitigen Erkennung von Batteriedefekten verwendet werden können. Die einzelnen Sensoren oder Erfassungseinrichtungen zum Erfassen der aktuellen Betriebsdaten sind dabei herkömmlicherweise in einer intelligenten Batteriesensorvorrichtung (IBS) zusammengefasst, die fest mit dem Fahrzeug, und nicht mit der Batterie verbunden ist. Beispielsweise ist die Batteriesensorvorrichtung in einer Anschlussklemme zum Anschluss an einen Batteriepol integriert. Über die mit der Batteriesensorvorrichtung integrierten Anschlussklemme, sowie mit einer zweiten Anschlussklemme, die mit einem weiteren Batteriepol verbindbar ist, kann schließlich ein Fahrzeugbordnetz mit elektrischer Energie versorgt werden.

Wird aus irgendeinem Grund eine Batterie vom Bordnetz des Fahrzeugs abgeklemmt, gehen die während dem Fahrzeugbetrieb gemessenen Betriebsdaten bzw. die daraus berechneten Batterieeigenschaften der gerade abgeklemmten Batterie verloren, da diese Daten gewöhnlicherweise in einem Speicher der Batteriesensorvorrichtung gespeichert werden, und nicht ohne weiteres einer neu angeschlossenen Batterie zugeordnet werden können. Folglich wird beispielsweise beim Wiederanschließen der Batterie im gleichen Fahrzeug oder in einem anderen Fahrzeug eine frühe Erkennung von Batteriedefekten aufgrund fehlender Batteriebetriebsdaten bzw. Batterieeigenschaften der gerade angeschlossenen Batterie erschwert.

US 2006/038572 A1 offenbart eine Vorrichtung und ein Verfahren zum Testen oder Laden einer Speicherbatterie, wobei ein RFID-Transponder verwendet wird, der an der Speicherbatterie anbringbar ist und mittels dessen batteriebezogene Informationen gespeichert und übertragen werden. Ferner umfassen die Vorrichtung und das Verfahren einen RF-Empfänger, mittels dessen die übertragenen Informationen empfangen und verwendet werden können.

US 5955865A offenbart eine Vorrichtung nach dem Oberbegriff des Anspruchs 1.

Somit besteht die Aufgabe der vorliegenden Erfindung darin, eine einfache Möglichkeit zu schaffen, eine Batterie- bzw. einen Energiespeicher beim (Wieder-) Anschließen an eine Überwachungsvorrichtung zu identifizieren.

Diese Aufgabe wird durch den Gegenstand der unabhängigen Ansprüche gelöst. Vorteilhafte Ausgestaltungen sind Gegenstand der Unteransprüche.

Dabei umfasst eine Vorrichtung zum Überwachen eines Energiespeichers, insbesondere einer wiederaufladbaren Batterie, für ein Kraftfahrzeug folgende Merkmale. Sie hat eine Sende-/Empfangseinrichtung zum Aussenden eines Anforderungssignals über eine drahtlose Kommunikationsschnittstelle an eine mit dem Energiespeicher verbundene Identifizierungsvorrichtung. Ferner ist die Sende-/Empfangseinrichtung dafür eingerichtet, energiespeicherspezifische Daten über die drahtlose Kommunikationsschnittstelle von der Identifizierungsvorrichtung zu empfangen, um den Energiespeicher und/oder dessen Betriebszustand zu identifizieren. Bei der drahtlosen Kommunikationsschnittstelle handelt es sich insbesondere um ein Funkschnittstelle, wobei jedoch auch andere Schnittstellen, wie ein Infrarotschnittstelle, denkbar sind. Durch die Möglichkeit, die Sende-/Empfangseinrichtung quasi als ein "Lesegerät" einzusetzen, um von einer dem Energiespeicher zugeordneten Identifizierungsvorrichtung entsprechende energiespeicherspezifische Daten zu erhalten bzw. auszulesen, kann bei einem insbesondere erneuten Anschließen eines Energiespeichers an das Bordnetz eines Fahrzeugs sofort erkannt werden, um welchen Energiespeicher (welche Batterie) es sich handelt, ob dieser Energiespeicher beispielsweise vom Fahrzeughersteller freigegeben ist, ob er neuwertig ist oder ob es sich um einen bereits vorher in irgendeinem Fahrzeug installierten Energiespeicher handelt. Diese empfangenen energiespeicherspezifischen Daten lassen sich dann als Batterieparameter für ein Batteriemodell in der Vorrichtung zum Überwachen, verwenden, so dass schließlich mit Hilfe des Batteriemodells eine Batteriediagnose wesentlich zuverlässiger erfolgen kann. Somit können eventuelle Batteriedefekte frühzeitig vorausgesagt und folglich die Funktionssicherheit erhöht werden.

Gemäß einer vorteilhaften Ausgestaltung ist das von der Sende-/Empfangseinrichtung ausgesendete Anforderungssignal ein Funksignal, das Daten bzw. Codes und/oder Energie (zur Energieversorgung) für die Identifizierungsvorrichtung beinhaltet. Insbesondere für den Fall, bei dem die Identifizierungsvorrichtung als Transponder ohne eigene Energiequelle ausgebildet ist, kann die mit dem Anforderungssignal mitgelieferte Energie- bzw. elektrische Leistung dafür verwendet werden, energiespeicherspezifische Daten aus einer Speichervorrichtung herauszuholen und zurück zur Sende-/Empfangseinrichtung zu senden. In dem Anforderungssignal enthaltene Daten oder Codes können beispielsweise dazu dienen, eventuell nur bestimmte energiespeicherspezifische Daten von der Identifizierungsvorrichtung abzufragen.

Die energiespeicherspezifischen Daten können dabei Daten zur Identifizierung des Energiespeichers und/oder Daten bezüglich des Betriebszustands des Energiespeichers, wie bereits anhand von aktuellen Betriebsdaten (Strom, Spannung, Temperatur) berechnete Eigenschaften des Energiespeichers umfassen. Dabei können die Daten zur Identifizierung des Energiespeichers beispielsweise das Herstellerdatum, den Fertigungsort, die Nennkapazität, den Nennkaltstartstrom, die Technologie (flüssiger bzw. nasser oder stabilisierter Elektrolyt), die Blei-Legierung (PbCa, PbSb, usw.) umfassen. Daten bezüglich des Betriebszustands können das Inbetriebnahmedatum beim Fahrzeughersteller (das Fertigungsdatum des Fahrzeugs) oder das Einbaudatum in einer Werkstatt, die Anzahl der Unterbrechungen der Verbindung zu einem Bordnetz, die Anzahl erkannter Tiefentladungen, den gemessenen Stromdurchsatz, die gemessene Überladedauer, die Betriebsdauer bei geringem Ladezustand, sowie ermittelte Eigenschaften des Energiespeichers bzw. Parameter, wie den Widerstand, Ladezustand, Kapazität, usw. umfassen.

Die Vorrichtung zum Überwachen kann ferner einen Datenspeicher zum Speichern von energiespeicherspezifischen Daten aufweisen. Werden energiespeicherspezifische Daten von einem Energiespeicher, der gerade mit der Vorrichtung zum Überwachen verbunden ist, in dem Datenspeicher gespeichert, so ist es nach dem Abklemmen und beispielsweise erneuten Anklemmen desselben Energiespeichers für die Vorrichtung zum Überwachen möglich, zu überprüfen, ob wieder der gleiche Energiespeicher angeschlossen ist. Dazu kann die Vorrichtung zum Überwachen mittels der Sende-/ Empfangseinrichtung die energiespeicherspezifischen Daten des neu angeklemmten Energiespeichers "auslesen" und mit den in dem Datenspeicher gespeicherten energiespeicherspezifischen Daten vergleichen. Bei einer Übereinstimmung der jeweiligen energiespeicherspezifischen Daten kann somit darauf geschlossen werden, dass es sich um denselben Energiespeicher handelt, der erneut angeklemmt wurde. Diese Identifizierung eines Energiespeichers ist insbesondere mittels der Daten zur Identifizierung der energiespeicherspezifischen Daten möglich. Unter Verwendung zusätzlich der Betriebszustandsdaten eines Energiespeichers bei der Analyse des neu angeklemmten bzw. verbundenen Energiespeichers ist es ferner möglich, festzustellen, ob ein evtl. identischer Energiespeicher mittlerweile, das heißt vor einem erneuten Anklemmen in Gebrauch gewesen ist.

Gemäß einem weiteren Aspekt der Erfindung wird eine Vorrichtung zum Überwachen eines Energiespeichers für ein Fahrzeug geschaffen, die als Weiterbildung der oben erwähnten Vorrichtung zum Überwachen oder als eine eigenständige Vorrichtung zum Überwachen eines Energiespeichers betrachtet werden kann. Dabei hat die Vorrichtung zum Überwachen gemäß dem zweiten Aspekt eine Sensoreinrichtung zum Erfassen von aktuellen Betriebsdaten des Energiespeichers. Die Sensoreinrichtung kann dabei beispielsweise einen Shunt- bzw. Messwiderstand zum Erfassen eines aktuell von dem Energiespeicher abgegeben Stromwerts, einen Temperatursensor zum Erfassen der aktuellen Temperatur des Energiespeichers, usw. umfassen. Ferner hat die Vorrichtung zum Überwachen eine Auswerteeinrichtung zum Ermitteln von Eigenschaften des Energiespeichers anhand der gemessenen aktuellen Betriebsdaten. Die Eigenschaften können dabei einen Ladezustand, die Leistungsfähigkeit, Alterungsgrad, den Innenwiderstand des Energiespeichers, der insbesondere als eine wiederaufladbare Batterie ausgebildet ist, umfassen. Schließlich hat die Vorrichtung zum Überwachen eine Sendeinrichtung bzw. eine Sende-/Empfangseinrichtung zum Übertragen von energiespeicherspezifischen Daten, wie der ermittelten Eigenschaften oder anderer Energiespeicherparameter, über eine drahtlose Schnittstelle an eine mit dem Energiespeicher verbundene Identifizierungsvorrichtung. Somit wird durch diese Vorrichtung zum Überwachen gemäß des zweiten Aspekts eine Möglichkeit geschaffen, während des Betriebs gemessene bzw. ermittelte Eigenschaften oder Parameter bei dem Energiespeicher selbst bzw. dessen Identifizierungsvorrichtung zu speichern. Wird der Energiespeicher dann einmal vom Bordnetz des Fahrzeugs abgeklemmt, weil beispielsweise eine Reparatur oder ein Austausch einer Bordnetzkomponente des Fahrzeugs zu erfolgen hat, und wird der Energiespeicher wieder ans Bordnetz angeklemmt, so können die in der Identifizierungsvorrichtung zuvor gespeicherten energiespeicherspezifischen Daten, wie die vom Hersteller vorgesehenen Grunddaten bzw. Identifizierungsdaten(z. B. Herstelldatum, Fertigungsort, usw.) sowie die während des Betriebs ermittelten Eigenschaften des Energiespeichers ausgelesen werden, und eine Überwachungsvorrichtung ist in der Lage, anhand der von dem (erneut) angeklemmten Energiespeicher ausgelesenen energiespeicherspezifischen Daten oder Parameter mittels eines Energiespeicher-Modells den Zustand des Energiespeichers zu erkennen und eventuelle mögliche Defekte frühzeitig vorherzusagen.

Gemäß einem weiteren Aspekt wird ein Energiespeicher, insbesondere eine wieder aufladbare Batterie für ein Fahrzeug geschaffen. Der Energiespeicher hat dabei eine Identifizierungsvorrichtung, die mit ihm verbunden ist. Vorteilhafterweise ist dabei die Identifizierungsvorrichtung unlösbar bzw. nicht verlierbar mit dem Energiespeicher verbunden. Dazu kann die Identifizierungsvorrichtung beispielsweise in einem Gehäuse des Energiespeichers integriert sein. Es ist jedoch auch möglich, bei einer Ausgestaltung der Identifizierungsvorrichtung mit geringen Abmessungen diese in einem Etikett des Energiespeichers vorzusehen, das durch ein Klebemittel an dem Energiespeicher befestigt wird. Die Identifizierungsvorrichtung hat dabei einen energiespeicherseitigen Datenspeicher zum Speichern von energiespeicherspezifischen Daten. Vorteilhafterweise, werden die Daten nichtflüchtig gespeichert. Des Weiteren hat die Identifizierungsvorrichtung eine Kommunikationseinrichtung umfassend eine Sendeeinrichtung zum Aussenden der in dem energiespeicherseitigen Datenspeicher gespeicherten energiespeicherspezifischen Daten über eine drahtlose Kommunikationsschnittstelle. Dabei kann die drahtlose Kommunikationsschnittstelle insbesondere als eine Funkschnittstelle ausgebildet sein. Wird beispielsweise ein derartiger Energiespeicher an das Bordnetz eines Fahrzeugs angeklemmt und mit einer entsprechenden Vorrichtung zum Überwachen des Energiespeichers verbunden, so kann eine derartige Vorrichtung zum Überwachen nach Empfang der energiespeicherspezifischen Daten über eine drahtlose Kommunikationsschnittstelle den Energiespeicher identifizieren und anhand eventueller weiterer Daten bzw. Parameter ein zuverlässiges Energiespeicher-Modell erstellen.

Gemäß einer vorteilhaften Ausgestaltung kann die Kommunikationseinrichtung der Identifizierungsvorrichtung ferner eine Empfangseinrichtung aufweisen, die dafür eingerichtet ist, energiespeicherspezifische Daten über eine drahtlose Kommunikationsschnittstelle zu empfangen und in dem energiespeicherseitigem Datenspeicher abzuspeichern. Zusätzlich oder alternativ dazu kann die Empfangseinrichtung ausgelegt sein, ein Anforderungssignal über eine drahtlose Kommunikationsschnittstelle zu empfangen, woraufhin die Sendeeinrichtung über den Empfang des Anforderungssignals informiert wird und ihrerseits (nur) ansprechend auf das Anforderungssignal die in dem energiespeicherseitigen Datenspeicher gespeicherten Daten aussendet. Durch ein mittels eines Anforderungssignals getriggertes Aussenden der energiespeicherspezifischen Daten ist es nicht nötig, dass die Sendeeinrichtung ständig bzw. in bestimmten Zeitintervallen die energiespeicherspezifischen Daten aussendet, sondern nur dann, wenn ein entsprechendes Lesegerät, wie eine Vorrichtung zum Überwachen des Energiespeichers die energiespeicherspezifischen Daten überhaupt (empfangen möchte).

Es ist dabei möglich, dass die Identifizierungsvorrichtung ferner einen Energiezwischenspeicher insbesondere mit geringer Kapazität aufweist, in dem elektrische Energie eines Anforderungssignals zwischengespeichert werden kann und für das Auslesen von energiespeicherspezifischen Daten aus dem energiespeicherseitigem Datenspeicher und zum Aussenden der ausgelesenen Daten verwendet werden kann. Dazu kann der Energiezwischenspeicher beispielsweise einen Kondensator umfassen.

Gemäß einer vorteilhaften Ausgestaltung kann die Identifizierungsvorrichtung als ein RFID (Radio Frequency Identification)-Transponder bzw. RFID-Tag ausgebildet sein. Eine Antenne sowie ein analoger Schaltkreis können dabei als Sendeeinrichtung bzw. Empfangseinrichtung verwendet werden. Des Weiteren weist der RFID-Transponder einen digitalen Schaltkreis mit einem Mikrochip auf, der schließlich mit einem permanenten bzw. nichtflüchtigen Speicher, im Falle der Identifizierungsvorrichtung dem energiespeicherseitigen Speicher verbunden ist. Bei einer Kommunikation mit einer Vorrichtung zum Überwachen des Energiespeichers kann diese Vorrichtung als ein Lesegerät (Reader) für die Identifizierungsvorrichtung des Energiespeichers verwendet werden. Dabei funktioniert eine RFID-Kommunikation prinzipiell folgendermaßen. Das Lesegerät (eine Vorrichtung zum Überwachen) erzeugt ein hochfrequentes elektromagnetisches Wechselfeld (entsprechend einem Anforderungssignal), das die Antenne bzw. Empfangseinrichtung des RFID-Transponders (der Identifizierungsvorrichtung) empfängt. In der Antennenspule entsteht, sobald sie in die Nähe des elektromagnetischen Felds kommt ein Induktionsstrom. Diese aktiviert einen in dem digitalen Schaltkreis befindlichen Mikrochip und durch den induzierten Strom wird bei sogenannten "passiven" RFID-Transpondern ein Kondensator (der oben genannte Energiezwischenspeicher) aufgeladen, welcher für eine Stromversorgung des Mikrochips bzw. einer Sendeeinrichtung sorgt. Diese Stromversorgung übernimmt bei sogenannten "aktiven" RFID-Transpondern eine in diesen eingebaute Batterie. Ist der Mikrochip einmal aktiviert, so kann er neben der empfangenen Energie bzw. Leistung ferner Daten bzw. Befehle empfangen, die das Lesegerät in sein magnetisches Feld (Anforderungssignal) moduliert. Je nach verwendeter Technik bzw. Frequenz, wie beispielsweise HF (Hochfrequenz bzw. Kurzwelle bei ca. 13 MHz) oder UHF (Ultrahochfrequenz bzw. Ultrakurzwelle bei ca. 865 bis 869 MHz) gibt ein RFID-Transponder ein Antwortsignal durch Lastmodulation im magnetischen Wechselfeld des Lesegeräts (HF) ab oder durch Übermitteln eines Antwortsignals über ein elektromagnetisches Fernfeld im Rahmen eines sogenannten "Backstackerings" (UHF).

Gemäß einem weiteren Aspekt der Erfindung wird eine Anordnung zum Bereitstellen von elektrischer Energie für ein Fahrzeug, insbesondere ein Kraftfahrzeug geschaffen, das einen oben erwähnten Energiespeicher für ein Fahrzeug sowie eine oben erwähnte Vorrichtung zum Überwachen eines Energiespeichers aufweist. Wie bereits erwähnt, ist es dabei möglich, dass die Vorrichtung zum Überwachen als ein Lesegerät dienen kann, um beispielsweise energiespeicherspezifische Daten aus einer Identifizierungsvorrichtung, die mit dem Energiespeicher verbunden ist, auszulesen, um den Energiespeicher zu identifizieren.

Im Folgenden sollen nun beispielhafte Ausführungsformen der vorliegenden Erfindung mit Bezug auf die beiliegende Zeichnung näher erläutert werden. Es zeigt:

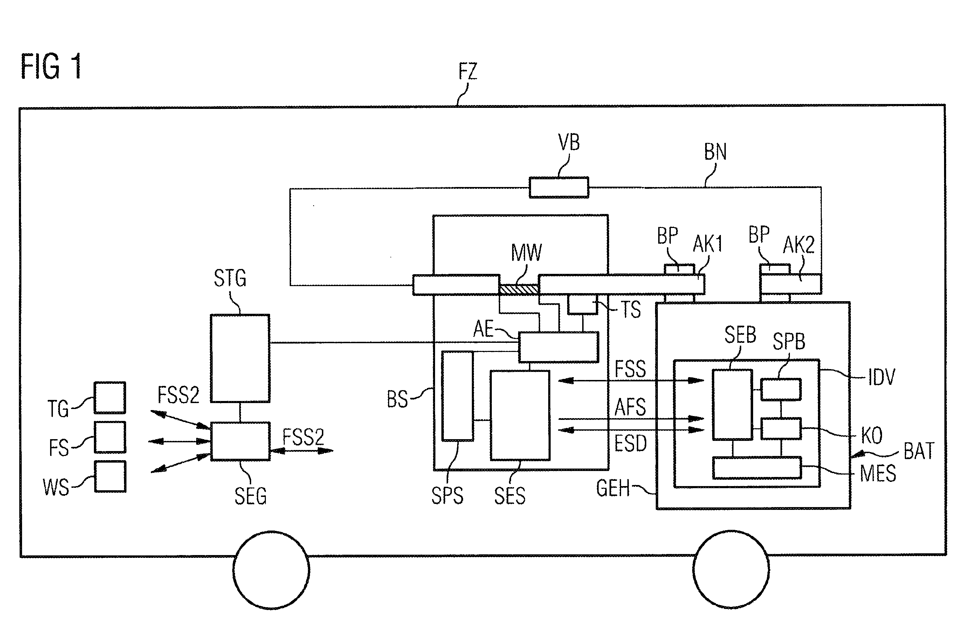

- Figur 1: eine schematische Darstellung eines Kraftfahrzeugs mit einer Anordnung zum Bereitstellen von elektrischer Energie gemäß einer Ausführungsform der Erfindung.

Figur 1 zeigt nun ein Fahrzeug FZ, das in diesem Fall als ein Kraftfahrzeug ausgebildet ist und für seinen Betrieb eine Anordnung zum Bereitstellen von elektrischer Energie benötigt. Diese Anordnung hat dabei einen Energiespeicher in der Form einer wiederaufladbaren Batterie BAT. Dabei hat die Batterie BAT ein Gehäuse GEH, beispielsweise aus einem Kunststoff bzw. aus Plastik, in dem eine Identifizierungsvorrichtung IDV integriert ist. Um einen Verlust der Identifizierungsvorrichtung von der Batterie zu vermeiden ist es auch denkbar, die Identifizierungsvorrichtung IDV an einem Batterieetikett anzubringen, das mittels eines geeigneten Klebers am Gehäuse der Batterie befestigt ist.

Die Identifizierungsvorrichtung IDV ist in der vorliegenden Ausführungsform als ein RFID-Transponder ausgebildet und weist eine Sende-/Empfangseinrichtung SEB auf, die sowohl mit einem Energiezwischenspeicher, hier in der Form eines Kondensators KO verbunden ist. Des Weiteren ist die Sende-/Empfangseinrichtung SEB mit einem nichtflüchtigen bzw. permanenten Datenspeicher SPB zum Speichern von energiespeicherspezifischen bzw. batteriespezifischen Daten verbunden. Die Funktionsweise der Identifizierungsvorrichtung IDV wird unten noch näher erläutert werden.

Die Batterie BAT weist ferner Batteriepole BP auf, die mit jeweiligen Anschlussklemmen AK1 und AK2 zur Verbindung mit einem Bordnetz BN des Fahrzeugs verbunden sind. Lediglich stellvertretend für eine Vielzahl von elektrischen Verbrauchern ist ein Verbraucher VB in dem Bordnetz BN dargestellt. In der Ausführungsform ist in der Anschlussklemme AK1 integriert bzw. mit dieser einstückig ausgebildet eine Batteriesensorvorrichtung BS als eine Vorrichtung zum Überwachen des Energiespeichers bzw. der Batterie BAT. Es ist jedoch auch möglich, dass auf eine derartige Integration der Anschlussklemme und der Batteriesensorvorrichtung verzichtet wird bzw. die Batteriesensorvorrichtung als eine separate Vorrichtung ausgebildet ist. In jedem Fall umfasst die Batteriesensorvorrichtung BS Sensoreinrichtung bzw. Erfassungseinrichtungen zum Erfassen von aktuellen Betriebsdaten der Batterie BAT. Eine der Sensoreinrichtungen umfasst dabei einen Temperatursensor TS zum Erfassen der aktuellen Betriebstemperatur der Batterie, welche über ein Batteriepol BP sowie die Anschlussklemme AK1 schließlich zum Temperatursensor TS geleitet wird. Des Weiteren umfasst die Batteriesensorvorrichtung hier eine Sensoreinrichtung in Form eines Messwiderstands MW zur Messung von Strom (wobei zu diesem Zweck auch ein Hall-Effekt-Sensor verwendet werden kann), der für eine Strommessung aus einem temperaturstabilen Material, beispielsweise aus Manganin ausgebildet ist. Die jeweiligen Sensordaten des Temperatursensors TS bzw. des Messwiderstand MW werden dann einer Auswerteeinrichtung AE zugeführt, die schließlich dafür eingerichtet ist, aus den gerade beschriebenen aktuellen Betriebsdaten oder aus weiteren Betriebsdaten Eigenschaften der Batterie BAT zu berechnen, wie beispielsweise den aktuellen Innenwiderstand, den aktuellen Ladezustand, die aktuelle Kapazität der Batterie, usw. Schließlich hat die Batteriesensorvorrichtung noch eine Sende-/Empfangseinrichtung SES zum Senden und Empfangen von Funksignalen, um insbesondere mit der entsprechenden Sende-/Empfangseinrichtung SEB der Identifizierungsvorrichtung IDV zu kommunizieren. Außerdem hat die Batteriesensorvorrichtung BS noch einen Datenspeicher SPS, der einerseits mit der Auswerteeinrichtung AE sowie mit der Sende-/Empfangseinrichtung SES verbunden ist. Wie es später noch näher erläutert werden wird, können somit aktuell erfasste Betriebsdaten der Batterie BAT oder auch daraus ermittelte Eigenschaften der Batterie bezüglich des aktuellen Betriebszustand der Batterie in dem Datenspeicher SPS abgelegt werden und gegebenenfalls mittels der Sende-/Empfangseinrichtung SES an die Identifizierungsvorrichtung IDV der Batterie BAT übermittelt werden.

Schließlich kann die Auswerteeinrichtung AE der Batteriesensorvorrichtung BS ferner mit einem Steuergerät des Fahrzeugs FZ, wie beispielsweise einem sogenannten Bodycontroller (einer zentralen Steuereinheit beispielsweise zum Steuern mehrerer Systeme, wie der Wegfahrsperre, der Reifendrucküberwachung oder der Fahrzeugverriegelung), einem Motorsteuergerät oder einem Gateway, usw. verbunden sein. Insbesondere bei einem Steuergerät STG in der Form eines Bodycontrollers für die Reifendrucküberwachung bzw. Fahrzeugverriegelung kann dieses Steuergerät STG ferner mit einer Sende-/Empfangseinrichtung SEG verbunden sein, die über eine Funkschnittstelle FSS2 mit Reifendrucksensoren TG, mit einem Funkschlüssel FS bzw. einer Wegfahrsperre WS kommunizieren kann. Des Weiteren ist es dann denkbar, dass eine derartige Sende-/Empfangseinrichtung SEG über die Funkschnittstelle FSS2 auch mit einer Sende-/Empfangseinrichtung SEB der Identifizierungsvorrichtung IDV kommunizieren kann. Es sei doch erwähnt, dass zur Umsetzung der Erfindung nicht beide Sende-/Empfangseinrichtungen SEG und SES vorhanden sein müssen, sondern dass die Implementierung einer der beiden Einrichtungen SEG oder SES ausreicht, um mit der Identifizierungsvorrichtung IDV zu kommunizieren.

Es sei nun angenommen, dass beispielsweise aufgrund einer Reparatur oder Austauschs eines Verbrauchers in dem Bordnetz BN des Fahrzeugs die Batterie BAT vom Bordnetz abgeklemmt werden muss. Die bisher während des Betriebs der Batterie BAT erfassten Betriebsdaten bzw. die daraus ermittelten Eigenschaften der Batterie BAT bezüglich des Betriebszustands werden gewöhnlich alle in dem Datenspeicher SPS der Batteriesensorvorrichtung BS gespeichert. Um diese Daten nicht zu verlieren bzw. der richtigen Batterie wieder zuordnen zu können, werden diese gerade erwähnten batteriespezifischen Daten ESD zur Vorbereitung auf ein Abklemmen der Batterie über eine Funkschnittstelle FSS von der Sende-/Empfangseinrichtung SES der Batteriesensorvorrichtung BS zu der Sende-/Empfangseinrichtung SEB der Identifizierungsvorrichtung IDV übertragen. Von der Sende-/Empfangseinrichtung SEB werden die Daten dann in dem Datenspeicher SPB abgelegt.

Nun können die nötigen Arbeiten am Bordnetz BN durchgeführt werden. Wird nun beispielsweise wieder dieselbe Batterie BAT über die Anschlussklemmen AK1 und AK2 an das Bordnetz BN angeschlossen, so kann nun die gerade angeschlossene Batterie wieder identifiziert werden. Dazu kann die Sende-/Empfangseinrichtung SES als ein Lesegerät dienen und die in dem Speicher SPB der Identifizierungsvorrichtung IDV gespeicherten Daten auslesen. Zu diesem Zweck sendet die Sende-/Empfangseinrichtung SES ein Anfragesignal AFS an die Sende-/Empfangseinrichtung SEB, welche ansprechend auf dieses Anfragesignal bzw. Anforderungssignal die im dem Datenspeicher SPB gespeicherten batteriespezifischen Daten ausliest und über die Funkschnittstelle FSS in Form der batteriespezifischen Daten ISD zur Sende-/Empfangseinrichtung SES überträgt. Das Steuern der Sende-/Empfangseinrichtung SEB kann z. B. ein Mikrochip bzw. Mikrocontroller übernehmen, der durch ein empfangenes Anfragesignal geweckt wird, und daraufhin das Auslesen der batteriespezifischen Daten sowie das Aussenden dieser veranlasst. Neben den zuvor erwähnten batteriespezifischen Daten bezüglich der erfassten Betriebsdaten bzw. der daraus ermittelten Eigenschaften oder Parameter der Batterie bezüglich ihres Betriebszustands können weitere batteriespezifische Daten in dem Datenspeicher SPB abgelegt sein und schließlich getriggert durch das Anforderungssignal an die Batteriesensorvorrichtung übertragen werden. Diese weiteren Daten können beispielsweise ein Herstellercode, ein Herstellerdatum, ein Fertigungsort, eine Nennkapazität, die der Batterie zugrundeliegende Technologie usw. sein.

Gemäß einer vorteilhaften Ausgestaltung kann die Identifizierungsvorrichtung ferner eine (insbesondere analoge) elektrische Messschaltung MES aufweisen, mit der Kenngrößen der Batterie (wie beispielsweise deren Temperatur) gemessen werden können. Diese elektrische Messschaltung MES kann dabei aus dem Energiezwischenspeicher bzw. Kondensator KO für die Dauer eines Messvorgangs einer Kenngröße mit elektrischer Energie versorgt werden. Der Messvorgang kann beispielsweise durch ein spezielles Anforderungssignal seitens der Batteriesensorvorrichtung ausgelöst werden. Die elektrische Messschaltung ist insbesondere dafür ausgelegt, dass sie mittels spezieller ihr zugeordneter Erfassungseinrichtungen analoge Größen, wie elektrische Spannungen, deren Wert von den zu messenden Kenngrößen bzw. Umgebungsbedingungen abhängen, erfasst. Ferner ist die Messschaltung dann dafür ausgelegt, diese erfassten analogen Größen in digitale Werte umzuwandeln (Analog/Digital-Wandler). Diese digitalen Werte können dann anschließend über die Sende-/Empfangseinrichtung SEB an die Batteriesensorvorrichtung BS oder über das Steuergerät STG an die Batteriesensorvorrichtung BS übertragen werden.

Wie bereits kann erwähnt, kann hierbei als Kenngröße die Temperatur der Batterie BAT erfasst werden. Dabei kann eine der Messschaltung zugeordnete Erfassungseinrichtung einen PTC (positive temperature coefficient)- oder NTC (negative temperature coefficient)-Widerstand aufweisen. Da die Messschaltung bzw. die Identifizierungsvorrichtung eine unabhängige Energieversorgung haben bzw. durch ein Anforderungssignal mit Energie versorgt werden, kann die Identifizierungsvorrichtung bzw. die Messschaltung und deren Erfassungseinrichtung(en) an einer beliebigen Stelle der Batterie angeordnet sein, wie beispielsweise an einer den Batteriepolen entgegen gesetzten Seite (Batterieunterseite) oder an einem unteren Abschnitt der Batterie (zumindest ist in der Figur die Messschaltung als an einem unteren Abschnitt der Batterie befindlich dargestellt). Somit wird beispielsweise im Fall der Temperaturmessung eine einfache Möglichkeit geschaffen, die Temperatur direkt und präzise an der Batterie zu messen, ohne einen großen vorrichtungstechnischen Aufwand bewerkstelligen zu müssen.

Die empfangenen batteriespezifischen Daten werden dann von der Sende-/Empfangseinrichtung SES in dem Datenspeicher SPS gespeichert, auf den wie bereits auch die Auswerteeinrichtung AE zugreifen kann. Somit ist die Auswerteeinrichtung AE in der Lage, die gerade empfangenen batteriespezifischen Daten bzw. Batterieparameter der gerade angeschlossenen Batterie in einem Batterie-Modell zu verwenden und somit einen künftigen Batteriezustand oder auch Batteriedefekte frühzeitig bzw. effektiv vorherzusagen.

Durch die Möglichkeit von einer Identifizierungsvorrichtung IDV der Batterie energiespezifische Daten zur Identifizierung bzw. zur Beschreibung der Eigenschaften bezüglich des aktuellen Betriebszustands (Innenwiderstand, Ladezustand, Kapazität, usw.) auszulesen, kann eine Batteriesensorvorrichtung BS schnell die gerade mit dem Bordnetz verbundene Batterie identifizieren und deren aktuellen Betriebszustand für ein Batterie-Modell übertragen. Dies führt zu einer höheren Betriebssicherheit, da Batteriedefekte bzw. Batterieversorgungen früher erkannt bzw. vorhergesagt werden können. Letztlich sinkt so die Zahl von Pannen aufgrund einer defekten Batterie.

## Patentansprüche

1. Vorrichtung zum Überwachen eines Energiespeichers (BAT) für ein Fahrzeug, umfassend:
- fahrzeugseitig eine Sende-/Empfangseinrichtung (SES) zum Aussenden eines Anforderungssignals (AFS) über eine drahtlose Kommunikationsschnittstelle (FSS) an eine mit dem Energiespeicher (BAT) verbundene Identifizierungsvorrichtung (IDV) und zum Empfangen von energiespeicherspezifischen Daten (ESD) über die drahtlose Kommunikationsschnittstelle (FSS) von der Identifizierungsvorrichtung (IDV), um den Energiespeicher (BAT) und/oder den Betriebszustand des Energiespeichers (BAT) zu identifizieren,
wobei
- energiespeicherseitig ein Datenspeicher (SPB) vorgesehen ist, in welchem energiespeicherspezifische Daten (ESD) gespeichert sind,
**dadurch gekennzeichnet, dass**
fahrzeugseitig ein weiterer Datenspeicher (SPS) vorgesehen ist, in welchem aktuelle energiespeicherspezifische Daten (ESD) gespeichert sind und von dem Daten in den energiespeicherseitigen Datenspeicher (SPB) übertragbar sind, und die Sende-/Empfangseinrichtung (SES) über die drahtlose Kommunikationsschnittstelle (FSS) mit einer energiespeicherseitigen Sende-/Empfangseinrichtung (SEB) der Identifizierungsvorrichtung (IDV) derart koppelbar ist, dass Daten des energiespeicherseitigen Datenspeichers (SPB) getriggert durch das Anforderungssignal in den weiteren Datenspeicher (SPS) übertragbar sind, und
fahrzeugseitig zumindest eine Sensoreinrichtung (MW, TS) zum Erfassen aktueller Betriebsdaten des Energiespeichers (BAT) und eine Auswerteeinrichtung (AB) zum Ermitteln von Eigenschaften des Energiespeichers (BAT) anhand der erfassten Betriebsdaten vorgesehen sind, wobei mittels Kopplung der Sende-/Empfangseinrichtungen (SES, SEB) die ermittelten Eigenschaften über die drahtlose Kommunikationsschnittstelle (FSS) an die mit dem Energiespeicher (BAT) verbundene Identifizierungsvorrichtung (IDV) übertragbar sind.

2. Vorrichtung nach Anspruch 1, bei der das Anforderungssignal (AFS) ein Funksignal ist, das Daten und/oder Energie zur Energieversorgung für die Identifizierungsvorrichtung (IDV) beinhaltet.

3. Vorrichtung nach Anspruch 1 oder 2, bei der die Sende-/ Empfangseinrichtung (SES) über die drahtlose Kommunikations- ... schnittstelle (FSS) mit der energiespeicherseitigen Sende-/ Empfangseinrichtung (SEB) der Identifizierungsvorrichtung (IDV) mittels eines Anforderungssignals (AFS) vor oder nach einem Abklemmen des Energiespeichers (BAT) koppelbar ist.

4. verfahren zum Überwachen eines Energiespeichers (BAT) für ein Fahrzeug, bei dem:
- mittels einer fahrzeugseitigen Sende-/Empfangseinrichtung (SES) ein Anforderungssignal (AFS) über eine drahtlose Kommunikationsschnittstelle (FSS) an eine mit dem Energiespeicher (BAT) verbundene Identifizierungsvorrichtung (IDV) ausgesendet wird und energiespeicherspezifische Daten (ESD) über die drahtlose Kommunikationsschnittstelle (FSS) von der Identifizierungsvorrichtung (IDV) empfangen werden, um den Energiespeicher (BAT) und/oder den Betriebszustand des Energiespeichers (BAT) zu identifizieren,
wobei
- energiespeicherseitig energiespeicherspezifische Daten (ESD) in einem Datenspeicher (SPB) gespeichert sind und/oder werden, ,
**dadurch gekennzeichnet, dass**
aktuelle energiespeicherspezifische Daten (ESD) in einem fahrzeugseitigen weiteren Datenspeicher (SPS) gespeichert sind und/oder werden und von dem weiteren Datenspeicher (SPS) Daten in den energiespeicherseitigen Datenspeicher (SPB) übertragen werden, und
die Sende-/Empfangseinrichtung (SES) über die drahtlose Kommunikationsschnittstelle (FSS) mit einer energiespeicherseitigen Sende-/Empfangseinrichtung (SEB) der Identifizierungsvorrichtung (IDV) derart gekoppelt wird, dass Daten des energiespeicherseitigen Datenspeichers (SPB) getriggert durch das Anforderungssignal in den weiteren Datenspeicher (SPS) übertragen werden, und
mittels einer fahrzeugseitigen Sensoreinrichtung (MW, TS) aktuelle Betriebsdaten des Energiespeichers (BAT) erfasst werden, anhand derer mittels einer Auswerteeinrichtung (AE) Eigenschaften des Energiespeichers (BAT) bestimmt werden, wobei mittels Kopplung der Sende-/Empfangseinrichtungen (SES, SEB) die ermittelten Eigenschaften über die drahtlose Kommunikationsschnittstelle (FSS) an die mit dem Energiespeicher (BAT) verbundene Identifizierungsvorrichtung (IDV) übertragen werden.

5. Verfahren nach Anspruch 4, bei der das Anforderungssignal (AFS) als ein Funksignal übertragen wird, das Daten und/oder Energie zur Energieversorgung für die Identifizierungsvorrichtung (IDV) beinhaltet.

6. Verfahren nach Anspruch 4 oder 5, bei der die Sende-/ Empfangseinrichtung (SES) über die drahtlose Kommunikationsschnittstelle (FSS) mit der energiespeicherseitigen Sende-/ Empfangseinrichtung (SEB) der Identifizierungsvorrichtung (IDV) mittels eines Anforderungssignals (AFS) vor oder nach einem Abklemmen des Energiespeichers (BAT) gekoppelt werden.

7. Anordnung zum Bereitstellen von elektrischer Energie für ein Fahrzeug (FZ) mit:
- einem Energiespeicher (BAT), insbesondere einer wieder aufladbaren Batterie (BAT), für ein Fahrzeug mit einer Identifizierungsvorrichtung (IDV) und einem energiespeicherseitigen Datenspeicher (SPB) zum Speichern von energiespeicherspezifischen Daten (ESD) sowie mit einer Sende-/Empfangseinrichtung (SEB) zum Aussenden der energiespeicherspezifischen Daten über eine drahtlose Kommunikationsschnittstelle (FSS), wobei bei Empfang eines Anforderungssignals (AFS) über die drahtlose Kommunikationsschnittstelle (FSS) die Sende-/Empfangseinrichtung (SEB) die energiespeicherspezifischen Daten (ESD) aussendet, und energiespeicherspezifische Daten (ESD) empfängt und in dem energiespeicherseitigen Datenspeicher (SPB) speichert;
- einer Vorrichtung (BS) zum Überwachen des Energiespeichers (BAT) nach einem der Ansprüche 1 bis 3.

8. Anordnung nach Anspruch 7, bei der der Energiespeicher (BAT) ein Gehäuseelement (GEH) aufweist, in dem die Identifizierungsvorrichtung (IDV) integriert ist.

9. Anordnung nach Anspruch 7 oder 8, bei der die Sende-/ Empfangseinrichtung (SEB) des Energiespeichers (BAT) als ein RFID-Transponder ausgebildet ist.

## Claims

1. Device for monitoring an energy storage unit (BAT) for a vehicle, including:
a transmit/receive facility (SES) on the vehicle side for emitting a request signal (APS) via a wireless communication interface (FSS) to an identification apparatus (IDV) connected to the energy storage unit (BAT) and for receiving energy storage unit-specific data (ESD) via the wireless communication interface (FSS) from the identification apparatus (IDV), in order to identify the energy storage unit (BAT) and/or the operating state of the energy storage unit (BAT), wherein
a data storage unit (SPB) is provided on the energy storage unit side, in which data storage unit energy storage unit-specific data (ESD) is stored,
**characterised in that**
a further data storage unit (SPS) is provided on the vehicle side, in which current energy storage unit-specific data (ESD) is stored and from which data can be transmitted into the data storage unit (SPB) on the energy storage unit side, and the transmit/receive facility (SES) can be coupled to a transmit/receive facility (SEB) of the identification apparatus (IDV) on the energy storage unit side via the wireless communication interface (FSS) such that data of the data storage unit (SPB) on the energy storage unit side can be transmitted into the further data storage unit (SPS) when triggered by the request signal, and
at least one sensor facility (MW, TS) for capturing current operating data of the energy storage unit (BAT) and an evaluation facility (AE) for determining properties of the energy storage unit (BAT) with the aid of the captured operating data are provided on the vehicle side, wherein the determined properties can be transmitted to the identification apparatus (IDV) connected to the energy storage unit (BAT) by way of the wireless communication interface (FSS) by coupling the transmit/receive facilities (SES, SEB),

2. Device according to claim 1, in which the request signal (AFS) is a radio signal, which contains data and/or energy for supplying energy to the identification apparatus (IDV).

3. Device according to claim 1 or 2, in which the transmit/receive facility (SES) can be coupled via the wireless communication interface (FSS) to the transmit/receive facility (SEB) of the identification apparatus (IDV) on the energy storage unit side by means of a request signal (AFS) prior to or after disconnection of the energy storage unit (BAT).

4. Method for monitoring an energy storage unit (BAT) for a vehicle, in which:
- a request signal (AFS) is emitted via a wireless communication interface (FSS) to an identification apparatus (IDV) connected to the energy storage unit (BAT) by means of a transmit/receive facility (SES) on the vehicle side and energy storage unit-specific data (ESD) is received by the identification apparatus (IDV) via the wireless communication interface (FSS) in order to identify the energy storage unit (BAT) and/or the operating state of the energy storage unit (BAT),
wherein
- energy storage unit-specific data (ESD) is stored in a data storage unit (SPB) on the energy storage unit side, **characterised in that**
current energy storage unit-specific data (ESD) is stored in a further data storage unit (SPS) on the vehicle side and/or data is transmitted into the data storage unit (SPB) on the energy storage unit side from the further data storage unit (SPS), and
the transmit/receive facility (SES) is coupled to a receive/transmit facility (SEB) of the identification apparatus (IDV) on the energy storage unit side via the wireless communication interface (FSS) such that data of the data storage unit (SPB) on the energy storage unit side is transmitted into the further data storage unit (SPS) when triggered by the request signal, and
current operating data of the energy storage unit (BAT) is captured by means of a sensor facility (MW, TS) on the vehicle side, with the aid of which properties of the energy storage unit (BAT) are determined by means of an evaluation facility (AE), wherein the determined properties are transmitted via the wireless communication interface (FSS) to the identification apparatus connected to the energy storage unit (BAT) by coupling the transmit/receive facilities (SES, SEB).

5. Method according to claim 4, in which the request signal (AFS) is transmitted as a radio signal, which contains data and/or energy for supplying energy to the identification apparatus (IDV).

6. Method according to claim 4 or 5, in which the transmit/receive facility (SES) is coupled via the wireless communication interface (FSS) to the transmit/receive facility (SEB) of the identification apparatus (IDV) on the energy storage unit side by means of a request signal (AFS) prior to or after disconnection of the energy storage unit (BAT).

7. Arrangement for providing electrical energy for a vehicle (FZ) having:
- an energy storage unit (BAT), in particular a rechargeable battery (BAT), for a vehicle with an identification apparatus (IDV) and a data storage unit (SPB) on the energy storage unit side for storing energy storage unit-specific data (ESD) and a transmit/receive facility (SEB) for emitting the energy storage unit-specific data via a wireless communication interface (FSS), wherein upon receipt of a request signal (AFS) via the wireless communication interface (FSS) the transmit/receive facility (SEB) emits the energy storage unit-specific data (ESD), and receives energy storage unit-specific data (ESD) and stores the same in the data storage unit (SPB) on the energy storage unit side,
- a device (BS) for monitoring the energy storage unit (BAT) according to one of claims 1 to 3.

8. Arrangement according to claim 7, in which the energy storage unit (BAT) comprises a housing element (GEH), in which the identification apparatus (IDV) is integrated.

9. Arrangement according to claim 7 or 8, in which the transmit/receive facility (SEB) of the energy storage unit (BAT) is embodied as an RFID transponder.

## Revendications

1. Dispositif de contrôle d'un accumulateur ( BAT ) d'énergie pour un véhicule comprenant :
- du côté du véhicule un dispositif ( SES ) d'émission/réception, pour l'envoi d'un signal ( AFS ) de demande par une interface ( FSS ) de communication sans fil à un dispositif ( IDV ) d'identification relié à l'accumulateur ( BAT ) d'énergie, et pour la réception de données ( ESD ) spécifiques à l'accumulateur d'énergie par l'interface ( FSS ) de communication sans fil du dispositif ( IDV ) d'identification pour identifier l'accumulateur ( BAT ) d'énergie et/ou l'état de fonctionnement de l'accumulateur ( BAT ) d'énergie,
dans lequel
- il est prévu du côté de l'accumulateur d'énergie une mémoire ( SPB ) de données, dans laquelle sont mémorisées des données ( ESD ) spécifiques à l'accumulateur d'énergie,
**caractérisé en ce que**
du côté du véhicule il est prévu une autre mémoire ( SPS ) de données, dans laquelle des données ( ESD ) présentes spécifiques à l'accumulateur d'énergie sont mémorisées et de laquelle des données peuvent être transmises à la mémoire ( SPB ) de données du côté de l'accumulateur d'énergie et le dispositif ( SES ) d'émission/réception est couplé par l'interface ( FSS ) de communication sans fil à un dispositif ( SEB ) d'émission/réception du côté de l'accumulateur d'énergie du dispositif ( IDV ) d'identification de manière à pouvoir transmettre à l'autre mémoire ( SPS ) de données, sans déclenchement par le signal de demande, des données de la mémoire ( SPB ) de données du côté de l'accumulateur d'énergie et
du côté du véhicule il est prévu au moins un dispositif ( MW, TS ) de capteur pour la détection de données présentes de fonctionnement de l'accumulateur ( BAT ) d'énergie et un dispositif ( AE ) d'exploitation pour la détermination de propriété de l'accumulateur ( BAT ) d'énergie au moyen des données de fonctionnement détectées, dans lequel au moyen d'un couplage des dispositifs ( SES, SEB ) d'émission/réception les propriétés déterminées peuvent être transmises par l'interface ( FSS ) de communication sans fil au dispositif ( IDV ) d'identification relié à l'accumulateur ( BAT ) d'énergie.

2. Dispositif suivant la revendication 1,
dans lequel le signal ( AFS ) de demande est un signal radio qui contient des données et/ou de l'énergie pour l'alimentation en énergie du dispositif d'identification.

3. Dispositif suivant la revendication 1 ou 2,
dans lequel le dispositif ( SES ) d'émission/réception peut être couplé par l'interface ( FSS ) de communication sans fil au dispositif ( SEB )d'émission/réception du côté de l'accumulateur d'énergie du dispositif ( IDV ) d'identification au moyen d'un signal ( AFS ) de demande avant ou après un déconnexion de l'accumulateur ( BAT ) d'énergie.

4. Procédé de contrôle d'un accumulateur ( BAT ) d'énergie pour un véhicule dans lequel :
- on envoie, au moyen d'un dispositif ( SES ) d'émission/réception du côté du véhicule, un signal ( AFS ) de demande par une interface ( FSS ) de communication sans fil à un dispositif ( IDV ) d'identification relié à l'accumulateur ( BAT ) d'énergie et on reçoit des données ( ESD ) spécifiques à l'accumulateur d'énergie par l'interface ( FSS ) de communication sans fil du dispositif ( IDV ) d'identification pour identifier l'accumulateur ( BAT ) d'énergie et/ou l'état de fonctionnement de l'accumulateur ( BAT ) d'énergie,
dans lequel
- on mémorise, du côté de l'accumulateur d'énergie dans une mémoire ( SPB ) de données, des données ( ESD ) spécifiques à l'accumulateur d'énergie,
**caractérisé en ce que**
- on mémorise, dans une autre mémoire ( SPS ) de données du côté du véhicule, des données ( ESD ) présentes spécifiques à l'accumulateur d'énergie et on transmet, de l'autre mémoire ( SPS ) de données, des données dans l'accumulateur ( SPB ) de données du côté de l'accumulateur d'énergie et
- on couple le dispositif ( SES ) d'émission/réception par l'interface ( FSS ) de communication sans fil à un dispositif ( SEB ) d'émission/réception du côté de l'accumulateur d'énergie du dispositif ( IDV ) d'identification de manière à transmettre des données de l'accumulateur ( SPB ) de données du côté de l'accumulateur d'énergie, d'une manière déclenchée par le signal de demande, à l'autre mémoire ( SPS ) de données et
au moyen d'un dispositif ( MW, TS ) de capteur du côté du véhicule on détecte des données de fonctionnement présentes de l'accumulateur ( BAT ) d'énergie aux moyens desquels on détermine à l'aide d'un dispositif d'exploitation des propriétés de l'accumulateur ( BAT ) d'énergie, dans lequel au moyen du couplage des dispositifs ( SES, SEB ) d'émission/réception on transmet les propriétés déterminées par l'interface ( FSS ) de communication sans fil au dispositif ( IDV ) d'identification relié à l'accumulateur ( BAT ) d'énergie.

5. Procédé de contrôle d'un accumulateur ( BAT ) d'énergie pour un véhicule suivant la revendication 4,
dans lequel on transmet le signal ( AFS ) de demande sous la forme d'un signal radio qui contient des données et/ou de l'énergie pour l'alimentation en énergie du dispositif ( IDV ) d'identification.

6. Procédé de contrôle d'un accumulateur ( BAT ) d'énergie pour un véhicule suivant l'une des revendications 4 ou 5,
dans lequel le dispositif ( SES ) d'émission/réception est couplé par l'interface ( FSS ) de communication sans fil au dispositif ( SEB ) d'émission/réception du côté de l'accumulateur d'énergie du dispositif ( IDV ) d'identification au moyen d'un signal ( AFS ) de demande avant ou après un débranchement de l'accumulateur ( BAT ) d'énergie.

7. Agencement de mise à disposition d'énergie électrique pour un véhicule ( FZ ) comprenant :
- un accumulateur ( BAT ) d'énergie, notamment une batterie ( BAT ) rechargeable, pour un véhicule comprenant un dispositif ( IDV ) d'identification et une mémoire ( SPB ) de données du côté de l'accumulateur d'énergie pour la mémorisation de données ( ESD ) spécifiques à l'accumulateur d'énergie ainsi qu'un dispositif ( SEB ) d'émission/réception pour l'envoi des données spécifiques à l'accumulateur d'énergie par une interface ( FSS ) de communication sans fil, dans lequel, à la réception d'un signal ( AFS ) de demande, le dispositif ( SEB ) d'émission/réception transmet par l'interface ( FSS ) de communication sans fil les données ( ESD ) spécifiques à l'accumulateur d'énergie et reçoit des données ( ESD ) spécifiques à l'accumulateur d'énergie et les mémorise dans la mémoire ( SPB ) de données du côté de l'accumulateur d'énergie
- un dispositif ( BS ) pour le contrôle de l'accumulateur ( BAT ) d'énergie suivant l'une des revendications 1 à 3.

8. Agencement suivant la revendication 7,
dans lequel l'accumulateur ( BAT ) d'énergie a un élément ( GEH ) de boîtier dans lequel est intégré le dispositif ( IDV ) d'identification.

9. Agencement suivant l'une des revendications 7 ou 8,
dans lequel le dispositif ( SEB ) d'émission/réception de l'accumulateur ( BAT ) d'énergie est constitué sous la forme d'un transpondeur RFID.
